# EUROPEAN PATENT SPECIFICATION

(11) **EP 2 550 874 B1**
(45) Date of publication and mention of the grant of the patent: **23.07.2014**
(21) Application number: 12177883.1
(22) Date of filing: 25.07.2012
(51) Int. Cl.: A23N 1/02, A23N 4/08, A47J 19/02, A47J 29/00

(54) **Separator for food with stones and pulp**
Separator für Lebensmittel mit Fruchtfleisch und Kernen
Séparateur d'aliments en pâte et graines

(30) Priority: 26.07.2011 IT CS20110020
(43) Date of publication of application: 30.01.2013
(73) Proprietor: Ungaro, Rosario Filippo, 88040 San Mango d'Aquino (IT)
(72) Inventor: Ungaro, Rosario Filippo, 88040 San Mango d'Aquino (IT)
(74) Representative: Perrotta, Aldo

(56) References cited:
- EP-A2- 1 232 695
- US-A- 1 349 739
- US-A- 2 478 651
- US-A- 2 544 006
- US-A- 3 122 188

## Description

### Technical field of the invention

The present invention relates to a separator for food with stones and pulp. The separator can be used both in waste and fresh products, in waste products such as olive pomace, to get from one part stones that can be used in stoves for heating and from the other part olive pulp that can be used as feedingstuff for animals and in fresh products in order to separate the pulp from the stones and to get a valuable food product to be used in food industry and clean stones that can be used for heating.

### State of the art

EP 1232695 (A2) describes a separator of stones and pulp, it is composed of a loader, which leads to a cylindrical element, which has rotating brushes that separate the stones from the pulp and that for centrifugal force compel the pulp to pass through a grid and then to fall into a container. The stones without pulp are moved at the end of the cylindrical element where they fall into another container. The solution proposed in EP 1232695 (A2) has several disadvantages. The main one is that the pulp that has to pass through the grid is not removed away from the outer surface and thus can accumulate on the grid that can clog, so resulting in a malfunction of the separator. Another disadvantage is the fact that the pulp that passes through the grid and falls only on one side increasing the possibility to clog the separator.

The present invention aims to overcome the disadvantages in the state of the art and be an effective solution to the problems present in the state of the art.

The technical problem that the present invention intends to solve is to create a separator that has means apt to remove the pulp passing through the holes of the grid, built as a cylindrical element, such a grid serves to separate the stones from the pulp. The pulp that accumulates on the outer lateral surface of the grid can clog the separator and cause a malfunction of the machine. To resolve this problem are provided external elements, that slide, possibly rotating, on the outer lateral surface of the cylindrical element and carry away the pulp that comes out of the holes of the cylindrical element. In this way, the cylindrical lateral surface of the cylindrical element will always be clean and functioning of the separator will be better.

To implement the main purpose of the invention a separator for food with stones and pulp is realized comprising an inlet mouth, a cylindrical element placed after the inlet mouth, containing rotary brushes around the axis of cylindrical element set in motion by rotation means, **characterized in that** the cylindrical element has holes on the entire lateral surface and that on the lateral outer surface of cylindrical element there are external elements sliding on the lateral outer surface of cylindrical element (3) for removing the pulp that passes through the holes.

Other characteristics are given by the fact that the external elements as they move along the lateral outer cylindrical element rotate, that the axis of the cylindrical element is vertical, that in the inlet mouth there is a device provided with fins that run around the axis of cylindrical element, that the cylindrical element is made of a perforated plate, that the cylindrical element is removable and can be replaced, that the external elements are more than two and lie on planes passing through the axis cylindrical element around which rotate the brushes and said external elements, that said separator is equipped with a microcomputer with smart cards, each smart card has information on the food material that has to be treated and checks whether the cylindrical element is suitable for the food material that you want to separate and establishes the parameters of speed of rotation of the dispenser, of the brushes and of the external elements.

Other characteristics and advantages of the present invention will appear clear from the following description of an embodiment of the present invention given as a non-limiting example by the figures 1, 2 and 3.

### Brief description of the figures.

Figure 1 is a split isometric view of the Separator for food with stones and pulp subject of the present invention;
Figure 2 shows a view from above of the Separator for food with stones and pulp, subject of the present invention;
Figure 3 is another split isometric view of the Separator for food with stones and pulp, subject of the present invention.

### Detailed description of a preferred embodiment of the invention

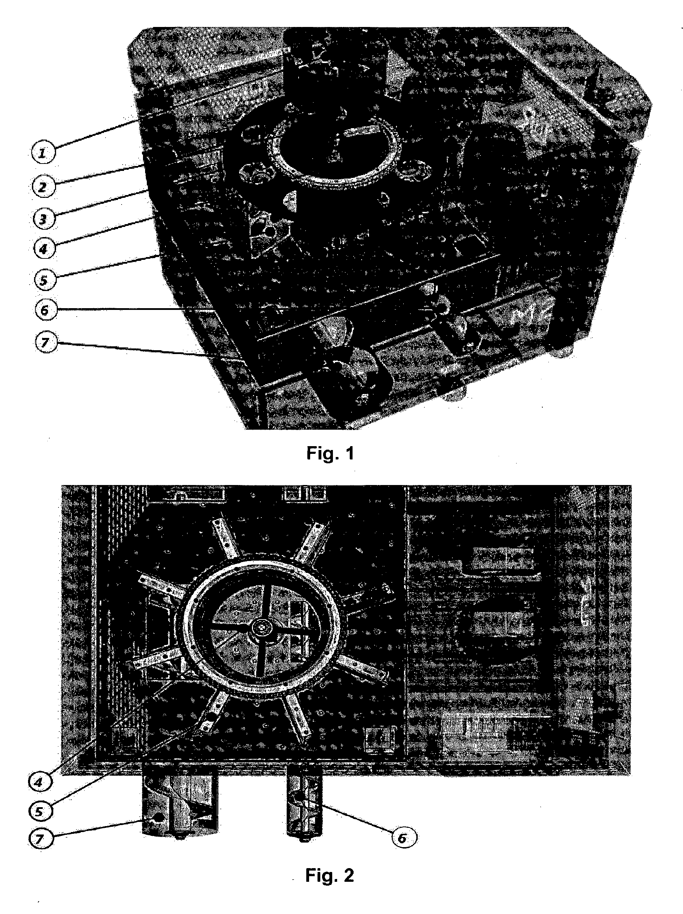

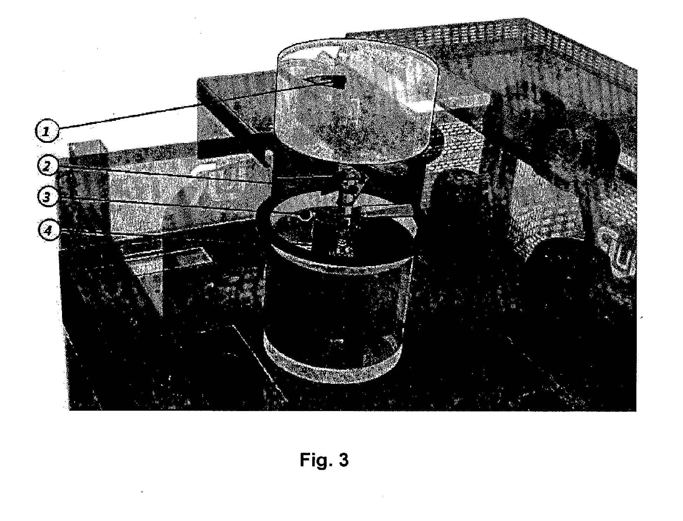

With reference to figures 1-3 the separator subject of the present invention comprises an inlet mouth (1) of the input material. This inlet mouth (1) communicates with a cylindrical element (3), which on the other side of the inlet mouth (1) is closed with a disc that has a slit. Said cylindrical element (3) has holes on the lateral surface, preferably is made of perforated metal plate. This inlet mouth (1) is, eventually, equipped with a dispensing device (2) comprising a series of fins arranged on the central axis of the said inlet mouth (1) and of the cylindrical element (3). Said dispensing device (2) is useful to dose the material avoiding that it comes all together and, therefore, can clog the separator. The dispensing device (2) consists of a series of fins arranged around the axis of cylindrical element (3) that are put in rotation when the material arrives. Inside the cylindrical element (3) arranged in line with it, brushes (4) are mounted on the central shaft that are put in rotation and compel, for the effect of centrifugal force, on the lateral surface the material that, through the input mouth (1) and the dispensing device (2), arrives in the cylindrical element (3). The material like pulp or of size smaller than the size of the holes of the cylindrical element (3) for the effect of centrifugal force passes through the holes of the perforated metal sheet of the cylindrical element.

On the outer side of the cylindrical element (3) are disposed external elements (5) that run on the outer lateral surface of the cylindrical element (3). The external elements (5), in the illustrated embodiment, are placed in rotation around the cylindrical element (3), but other embodiments are possible, such as sliding with alternating linear motion. The external elements (5), preferably, rotate in the opposite direction of rotation of the brushes (4). The external elements (5), preferably, are more than two and lie on planes passing through axis of the cylindrical element (3) around which both the brushes (4) and the same external elements (5) rotate. The external elements (5) take away the material in pulp or of dimension smaller than the size of the holes of the cylindrical element (3) passing through said holes of the cylindrical element (3). Preferably, the external elements (5) scrape the outer face of the cylindrical element (3) over the entire length of the cylindrical element (3).

The material in pulp or of dimension smaller than the size of the holes of the cylindrical element (3) passing through said holes of the cylindrical element (3) is removed from external elements (5) falls into a slit at the base of the separator, under the external elements (5) and is transported out of the separator through a first screw conveyor (7).

The material larger than the size of the holes of the cylindrical element (3) failing to pass through the holes of the cylindrical element (3) falls on closing disk of the cylindrical element (3), and falls through a slit in a second screw conveyor (6) that removes the material larger than the size of the holes of the cylindrical element (3).

Preferably but not exclusively, the separator has a vertical rotation axis. The cylindrical element (3) is removable and can be changed depending on the food material you want to separate.

The separator subject of the present invention works as follows: the food material having stones and pulp is introduced into the separator through the inlet mouth (1) the material by means of a dispenser (2) provided with fins rotating around the central axis comes in a cylindrical element (3) that has holes on the lateral surface and inside rotating brushes (4) moved by rotation means. The food material with stones and pulp for the effect of centrifugal force caused by the rotation of the brushes (4) is forced into the holes of the lateral surface of cylindrical element (3). The pulp of the food material passes through the holes in the perforated metal sheet of the cylindrical element (3). The pulp that accumulates on the outer lateral surface of the cylindrical element (3) is taken away by external elements (5) running around the cylindrical element (3). The pulp, through a first slit, reaches a first screw conveyor (7) and is removed, while the stones through a second slit, come to a second screw conveyor (6) and are expelled.

The separator subject of the present invention can be equipped with a microcomputer with a smart card. Each smart card checks if the cylindrical element (3) is suitable for the food material you want to separate and establishes the parameters of rotation speed of the dispenser (2), of the brushes (4) and of the external elements (5).

The discovery, it should be noted, is not limited to the representations given by the figures, but may be perfected and modified by those skilled in the art, without, however, exceeding the limits of the patent.

The present invention permits numerous advantages and to overcome difficulties that could not be overcome with the systems on sale at present.

## Claims

1. Separator for food with stones and pulp comprising an inlet mouth (1), a cylindrical element (3) placed after the inlet mouth (1), containing rotary brushes (4) around the axis of the cylindrical element (3) set in motion by rotation means, **characterized in that** the cylindrical element (3) has holes on the entire lateral surface and that on the lateral outer surface of the cylindrical element (3) there are external elements (5) sliding on the lateral outer surface of said cylindrical element (3) for removing the pulp that passes through the holes.

2. Separator for food with stones and pulp according to claim 1, **characterized in that** the external elements (5) as they move along the outer lateral surface of cylindrical element (3) rotate.

3. Separator for food with stones and pulp according to claim 2, **characterized in that** the axis of the cylindrical element (3) is vertical.

4. Separator for food with stones and pulp according to claim 3 **characterized by** the fact that in the inlet mouth (1) there is a device (2) provided with fins that run around the axis of the cylindrical element (3).

5. Separator for food with stones and pulp according to claim 4, **characterized in that** the cylindrical element (3) is made of a perforated plate.

6. Separator for food with stones and pulp according to claim 5, **characterized in that** the cylindrical element (3) is removable and can be changed.

7. Separator for food with stones and pulp according to claim 5, **characterized in that** the external elements (5) are more than two and lie on planes passing for the axis of the cylindrical element (3) around which rotate both brushes (4) and said external elements (5).

8. Separator for food with stones and pulp according to claim 6, **characterized in that** said separator is equipped with a microcomputer with smart cards, each smart card having information on the food material that has to be separated, and verifies that the cylindrical element (3) is suitable for the material to be separated, and establishes the parameters of speed of rotation of the device (2), brushes (4) and external elements (5).

## Patentansprüche

1. Trennvorrichtung für Lebensmittel mit Kernen und Fruchtfleisch, umfassend eine Einlassöffnung (1), ein zylindrisches Element (3), das nach der Einlassöffnung (1) angeordnet ist, das Drehbürsten (4) um die Achse des zylindrischen Elements (3) enthält, die durch Drehmittel in Bewegung gesetzt werden, **dadurch gekennzeichnet, dass** das zylindrische Element (3) Löcher auf der gesamten seitlichen Fläche aufweist, und dass auf der seitlichen äußeren Fläche des zylindrischen Elements (3) externe Elemente (5) vorhanden sind, die auf der seitlichen äußeren Fläche des zylindrischen Elements (3) gleiten, um das Fruchtfleisch zu entfernen, das durch die Löcher tritt.

2. Trennvorrichtung für Lebensmittel mit Kernen und Fruchtfleisch nach Anspruch 1, **dadurch gekennzeichnet, dass** sich die externen Elemente (5) drehen, wenn sie sich entlang der äußeren seitlichen Fläche des zylindrischen Elements (3) bewegen.

3. Trennvorrichtung für Lebensmittel mit Kernen und Fruchtfleisch nach Anspruch 2, **dadurch gekennzeichnet, dass** die Achse des zylindrischen Elements (3) vertikal ist.

4. Trennvorrichtung für Lebensmittel mit Kernen und Fruchtfleisch nach Anspruch 3, **gekennzeichnet durch** die Tatsache, dass in der Einlassöffnung (1) eine Vorrichtung (2) mit Rippen bereitgestellt ist, die um die Achse des zylindrischen Elements (3) verlaufen.

5. Trennvorrichtung für Lebensmittel mit Kernen und Fruchtfleisch nach Anspruch 4, **dadurch gekennzeichnet, dass** das zylindrische Element (3) aus einer perforierten Platte hergestellt ist.

6. Trennvorrichtung für Lebensmittel mit Kernen und Fruchtfleisch nach Anspruch 5, **dadurch gekennzeichnet, dass** das zylindrische Element (3) entfernbar ist und ausgetauscht werden kann.

7. Trennvorrichtung für Lebensmittel mit Kernen und Fruchtfleisch nach Anspruch 5, **dadurch gekennzeichnet, dass** die externen Elemente (5) mehr als zwei sind und auf Ebenen liegen, die durch die Achse des zylindrischen Elements (3) verlaufen, um die sich sowohl die Bürsten (4) als auch die externen Elemente (5) drehen.

8. Trennvorrichtung für Lebensmittel mit Kernen und Fruchtfleisch nach Anspruch 6, **dadurch gekennzeichnet, dass** die Trennvorrichtung mit einem Mikrocomputer mit Chipkarten ausgestattet ist, wobei jede Chipkarte Informationen über das Lebensmittelmaterial umfasst, das getrennt werden soll, und überprüft, ob das zylindrische Element (3) für das Lebensmittel, das getrennt werden soll, geeignet ist, und die Parameter der Drehgeschwindigkeit der Vorrichtung (2), der Bürsten (4) und der externen Elemente (5) festsetzt.

## Revendications

1. Séparateur pour aliments avec noyaux et pulpe, comprenant une bouche d'entrée (1), un élément cylindrique (3) placée après la bouche d'entrée (1), qui contient des brosses rotatives ( 4 ) autour de l'axe de l'élément cylindrique (3) mises en mouvement par des moyens de rotation , **caractérisé en ce que** l'élément cylindrique (3) présente des trous sur toute la surface latérale et que sur la surface latérale extérieure de l'élément cylindrique (3) il ya des éléments extérieurs (5) qui glissent sur la surface latérale extérieure de ledit élément cylindrique (3 ) pour enlever la pulpe qui passe à travers les trous.

2. Séparateur pour aliments avec noyaux et pulpe selon la revendication 1, **caractérisé en ce que** les éléments externes (5) tournent alors qu'ils se déplacent le long de la surface latérale extérieure de l'élément cylindrique (3).

3. Séparateur pour aliments avec noyaux et pulpe selon la revendication 2, **caractérisé en ce que** l'axe de l'élément cylindrique (3) est vertical.

4. Séparateur pour aliments avec noyaux et pulpe selon la revendication 3, **caractérisé par le fait que** dans la bouche d'entrée (1 ) il existe un dispositif (2) pourvu d'ailettes qui tournent autour de l'axe de l'élément cylindrique (3).

5. Séparateur pour aliments avec noyaux et pulpe selon la revendication 4, **caractérisé en ce que** l'élément cylindrique (3) est faite d' une plaque perforée.

6. Séparateur pour aliments avec noyaux et pulpe selon la revendication 5, **caractérisé en ce que** l'élément cylindrique (3) est amovible et peut être changée.

7. Séparateur pour aliments avec noyaux et pulpe selon la revendication 5 , **caractérisé en ce que** les éléments externes ( 5) sont plus de deux et se trouvent sur des plans passant pour l'axe de l'élément cylindrique (3) autour duquel les brosses ( 4) et lesdits éléments externes (5) tournent.

8. Séparateur pour aliments avec noyaux et pulpe selon la revendication 6, **caractérisé en ce que** ledit séparateur est équipé d'un micro-ordinateur avec une carte à puce , chaque carte à puce comportant des informations sur le matériau alimentaire qui doit être séparé et vérifie que l'élément cylindrique ( 3 ) est adapté pour le matériau alimentaire à séparer et établit les paramètres de vitesse de rotation du dispositif (2), des brosses ( 4 ) et les éléments extérieurs (5) .
